# EUROPEAN PATENT APPLICATION

(11) **EP 4 230 665 A1**
(43) Date of publication of application: **23.08.2023**
(21) Application number: 21879514.4
(22) Date of filing: 15.10.2021
(51) Int. Cl.: C08F 210/06, C08F 210/08

(54) **PROPYLENE-BUTENE COPOLYMER, PREPARATION METHOD THEREFOR AND USE THEREOF**

(30) Priority: 15.10.2020 CN 202011103642; 15.10.2020 CN 202011104743
(71) Applicant: CHINA PETROLEUM & CHEMICAL CORPORATION, Chaoyang District Beijing 100728 (CN); BEIJING RESEARCH INSTITUTE OF CHEMICAL INDUSTRY, CHINA PETROLEUM & CHEMICAL CORPORATION, Chaoyang District Beijing 100013 (CN)
(72) Inventor: ZHAO, Jin, Beijing 100013 (CN); ZHOU, Junling, Beijing 100013 (CN); XIA, Xianzhi, Beijing 100013 (CN); LIU, Yuexiang, Beijing 100013 (CN); LIU, Tao, Beijing 100013 (CN); LING, Yongtai, Beijing 100013 (CN); LI, Weili, Beijing 100013 (CN); GAO, Futang, Beijing 100013 (CN); CHEN, Long, Beijing 100013 (CN); TAN, Yang, Beijing 100013 (CN); REN, Chunhong, Beijing 100013 (CN)
(74) Representative: Hoffmann Eitle
(86) International application number: PCT/CN2021/123945
(87) International publication number: WO 2022/078473

(57) **Abstract**

Disclosed is a propylene-butene copolymer. The copolymer contains, based on the total amount of structural units of the copolymer, 90-99 mol% of propylene structural units and 1-10 mol% of butene structural units. The xylene solubles content of the copolymer is less than or equal to 4 wt%, and preferably less than or equal to 3 wt%. The propylene-butene copolymer is substantially free of fraction having a molecular weight lower than 1000. The copolymer has a melt flow index of greater than or equal to 20 g/10 min as measured at 230 °C under a load of 2.16 kg. The propylene-butene copolymer of the present invention has the advantages of a high melt flow index and few xylene solubles, and does not contain a phthalate-type plasticizer, thereby being beneficial to the application thereof in fields such as food and medical and health services.

## Description

### Cross reference of related applications

This application claims priority and benefits of CN202011104743.5 and CN202011103642.6, filed on October 15, 2020, which are incorporated herein by reference in their entirety for all purposes.

### Technical field

The invention belongs to the field of olefin polymerization, and in particular relates to a propylene-butene copolymer, a preparation method of the propylene-butene copolymer, and the application of the propylene-butene copolymer in foods and/or medical and healthcare products.

### Background art

Polypropylene (PP) is a colorless and translucent thermoplastic resin, and has the advantages of low relative density, ease of processing, high impact strength, corrosion resistance, good electrical insulation and low price. It is one of the fastest growing materials among general-purpose plastics, is widely used in chemical industry, construction, home appliances, agriculture, automobile industry and other fields. At present, new PP products are mainly concentrated on copolymer products. The copolymerization of propylene includes copolymerization with monomers such as ethylene, butene and long-chain α-olefins. The introduction of new monomers into the molecular chain will obviously bring about changes in the properties of polypropylene and expansion of application fields, and this has therefore been a new direction of polypropylene development recently. Compared with the traditional homopolymer PPs, new PPs copolymerized from propylene and butene have the advantages of high transparency, good gloss, high impact resistance and low heat sealing temperature. They can be widely used in the fields of packaging, medical equipment, toys, home appliances, automobiles and other high-grade daily necessities, and are upgraded products of traditional homopolypropylenes.

At present, most of the commercialized propylene-butene copolymers are products with low melt flow index and high content of xylene solubles and have poor market competitiveness. Therefore, propylene-butene copolymers with both high melt flow index and low content of xylene solubles will have higher product added value and broader market prospects because of their excellent processability and low content of leachables.

With regard to the propylene-butene copolymers, from the viewpoint of environmental protection, the following issues should be paid attention to: (1) avoiding the inclusion of substances that are harmful to health such as plasticizers; (2) reducing as much as possible small molecules that are easy to be leached or cause VOCs; and (3) reducing as much as possible the content of extractables, thereby avoiding the limitation to the application in the fields of food packaging and the like.

### Summary of the invention

An object of the present invention is to provide a propylene-butene copolymer, a preparation method therefor and use thereof, which copolymer has both a high melt flow index and a low content of xylene solubles so that it can be advantageously used in the fields of food, medicine and healthcare, and the like.

A further object of the present invention is to provide a propylene-butene copolymer and a preparation method therefor, which copolymer has the advantages of low content of xylene solubles, narrow molecular weight distribution and low content of small molecules, and is free of phthalate-type plasticizers so that it can be advantageously used in the fields of food packaging, medicine and healthcare, etc.

Accordingly, in a first aspect, the present invention provides a propylene-butene copolymer, which comprises from 90 to 99 mol% of propylene structural units and from 1 to 10 mol% of butene structural units, and preferably from 91 to 97 mol% of propylene structural units and from 3 to 9 mol% of butene structural units, based on the total moles of copolymer structural units, and which has a content of xylene solubles ≤ 4 wt%, preferably ≤ 3 wt%, still more preferably ≤ 2.8 wt%, still more preferably ≤ 2.5 wt%, and even more preferably ≤ 2.3 wt%, wherein the propylene-butene copolymer is substantially free of a fraction having a molecular weight below 1000. Preferably, the copolymer has a molecular weight distribution index, Mw/Mn, less than 5, preferably less than 4.5, and more preferably less than 4.

In a second aspect, the present invention provides a propylene-butene copolymer, which comprises from 92 to 99 mol% of propylene structural units and from 1 to 8 mol% of butene structural units, and preferably from 93 to 97 mol% of propylene structural units and from 3 to 7 mol% of butene structural units, based on the total moles of copolymer structural units, and which has a melt flow index, as measured at 230 °C under 2.16 kg load, of ≥ 20g/10min, preferably from 35 to 200 g/10min, more preferably from 50 to 150 g/10min, and still more preferably from 50 to 100 g/10min, and a content of xylene solubles ≤ 5 wt%, preferably ≤ 4 wt%, more preferably ≤ 3 wt%, still more preferably ≤ 2.8 wt%, still more preferably ≤ 2.5 wt%, and even more preferably ≤ 2.3 wt%.

In a third aspect, the present invention provides a method for preparing the propylene-butene copolymer, comprising the step of polymerizing propylene and butene in the presence of a catalyst and optional hydrogen under olefin polymerization reaction conditions, to obtain the propylene-butene copolymer,
wherein the catalyst is a Ziegler-Natta catalyst comprising a solid catalyst component, an alkylaluminum compound and an optional external electron donor compound,
the solid catalyst component comprising a reaction product of
   (i) a magnesium-containing compound;
   (ii) a titanium-containing compound; and
   (iii) an internal electron donor,
wherein the internal electron donor comprises a phosphate compound and a diether compound.

In some embodiments, the method further comprises conducting a precontact reaction of the solid catalyst component, the alkylaluminum compound, and the optional external electron donor compound, and after the precontact reaction and before the polymerization reaction, conducting a prepolymerization reaction using propylene monomer and/or other alpha-olefin monomer (e.g., ethylene or butene) and optionally hydrogen in the presence of the precontacted catalyst.

In a fifth aspect, the present invention provides the use of the above-described propylene-butene copolymer in food and/or medicine and healthcare products.

The propylene-butene copolymer of the present invention has the advantages of high melt flow index and few xylene solubles and is free of phthalate-type plasticizers. Alternatively, the propylene-butene copolymer of the present invention has the advantages of less xylene solubles and narrow molecular weight distribution and is free of phthalate-type plasticizers. The above features are beneficial to its application in the fields of food, medicine and healthcare.

Other features and advantages of the present invention will be described in detail below.

### Detailed description of preferred embodiments

Specific embodiments of the present invention will be described in detail below. It should be understood that the specific embodiments described herein are only used to illustrate and explain the present invention, but not to limit the present invention.

In the first aspect, the present invention provides a propylene-butene copolymer, which comprises from 90 to 99 mol% of propylene structural units and from 1 to 10 mol% of butene structural units, and preferably from 91 to 97 mol% of propylene structural units and from 3 to 9 mol% of butene structural units, based on the total moles of copolymer structural units, and which has a content of xylene solubles ≤ 4 wt%, preferably ≤ 3 wt%, still more preferably ≤ 2.8 wt%, still more preferably ≤ 2.5 wt%, and even more preferably ≤ 2.3 wt%, wherein the propylene-butene copolymer is substantially free of a fraction having a molecular weight below 1000. As understood by those skilled in the art, the lower the content of the small molecule fraction in the copolymer, the less the leachables in the articles, and in turn the higher the safety when the articles come into contact with the human body.

The term "butene" as used herein means 1-butene unless otherwise specified.

In some embodiments, the copolymer has a molecular weight distribution index, Mw/Mn, of less than 5, preferably less than 4.5, and more preferably less than 4.

In the present disclosure, the content of xylene solubles is measured according to GB/T 24282-2009; the molecular weight distribution index and the content (percent by weight) of the fraction with molecular weight below 1000 are determined by gel permeation chromatography (GPC). Specifically, Shimadzu LC-10AT gel permeation chromatograph (GPC) can be used, wherein trichlorobenzene is used as a mobile phase and the temperature is 150 °C.

In the present disclosure, the expression "the propylene-butene copolymer is substantially free of a fraction with a molecular weight below 1000" means that the propylene-butene copolymer comprises less than 0.015 wt%, preferably less than 0.01 wt%, and more preferably less than 0.005 wt% of the fraction with a molecular weight below 1000 g/mol, as determined by the GPC method. In some embodiments, the propylene-butene copolymer of the present invention is measured by the GPC method, and the measurement results show that the content of the fraction with a molecular weight below 1000 g/mol is zero.

In some embodiments, the propylene-butene copolymer is characterized by being free of phthalate-type plasticizers, in addition to the above-mentioned low content of xylene solubles, narrow molecular weight distribution, and low content of small molecules.

In the second aspect, the present invention provides a propylene-butene copolymer, which comprises from 92 to 99 mol% of propylene structural units and from 1 to 8 mol% of butene structural units, and preferably from 93 to 97 mol% of propylene structural units and from 3 to 7 mol% of butene structural units, based on the total moles of copolymer structural units, and which has a melt flow index, as measured at 230 °C under 2.16 kg load, of ≥ 20g/10min, preferably from 35 to 200 g/10min, more preferably from 50 to 150 g/10min, and still more preferably from 50 to 100 g/10min, and a content of xylene solubles of ≤ 5 wt%, preferably ≤ 4 wt%, more preferably ≤ 3 wt%, still more preferably ≤ 2.8 wt%, still more preferably ≤ 2.5 wt%, and even more preferably ≤ 2.3 wt%.

In the present disclosure, the melt flow index is measured according to GB/T 3682-2000.

In some embodiments, the propylene-butene copolymer is characterized by being free of phthalate-type plasticizers, in addition to the above-mentioned high melt flow index and low content of xylene solubles. The expression "free of phthalate-type plasticizers", as used herein, means that the propylene-butene copolymer comprises no intentionally added phthalate-type plasticizer.

In the third aspect, the present invention provides a method for preparing the propylene-butene copolymer, comprising the step of polymerizing propylene and butene in the presence of a catalyst and optional hydrogen under olefin polymerization reaction conditions, to obtain the propylene-butene copolymer,
wherein the catalyst is a Ziegler-Natta catalyst comprising a solid catalyst component, an alkylaluminum compound and an optional external electron donor compound,
the solid catalyst component comprising a reaction product of
   (i) a magnesium-containing compound;
   (ii) a titanium-containing compound; and
   (iii) an internal electron donor,
wherein the internal electron donor comprises a phosphate compound and a diether compound.

In some embodiments, the olefin polymerization reaction is carried out in the presence of hydrogen, wherein the hydrogen concentration on molar basis in the polymerization system is ≥ 1200 ppm, preferably in the range of from 1800 to 8000 ppm, and more preferably in the range of from 2300 to 6000 ppm.

In some embodiments, the propylene and butene are used in the method in amounts such that the copolymer comprises 92-99 mol% of propylene structural units and 1-8 mol% of butene structural unit, preferably 93-97 mol% of propylene structural units and 3-7 mol% of butene structural units, based on the total moles of copolymer structural units.

In other embodiments, the propylene and butene are used in the method in amounts such that the copolymer comprises 90-99 mol% of propylene structural units and 1-10 mol% of butene structural unit, preferably 91-97 mol% of propylene structural units and 3-9 mol% of butene structural units, based on the total moles of copolymer structural units.

According to the present invention, the combined content of the phosphate compound and the diether compound is preferably from 70 to 100 % by weight, more preferably from 80 to 100 % by weight, further preferably from 90 to 100 % by weight, and most preferably 100 % by weight, based on the weight of the internal electron donor.

In some preferred embodiments, the solid catalyst component does not comprise a phthalate-type compound as an internal electron donor.

In the present invention, there are not particular limitations to the type of the phosphate compound, and it can be various existing phosphate compounds that can be used as an internal electron donor in a catalyst for olefin polymerization. Preferably, the phosphate compound is at least one of those represented by formula (1), 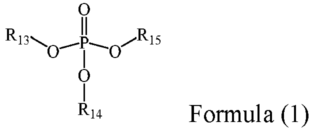 wherein, R₁₃, R₁₄ and R₁₅ are, each independently, selected from the group consisting of C₁-C₂₀ linear or branched alkyl, C₃-C₂₀ cycloalkyl, C₆-C₂₀ aryl, C₇-C₂₀ alkaryl and C₇-C₂₀ aralkyl, the hydrogen atom(s) on the benzene ring in the aryl, the alkaryl and the aralkyl being optionally substituted by a halogen atom or a C₁-C₄ alkoxy; further preferably, R₁₃, R₁₄ and R₁₅ are, each independently, selected from the group consisting of C₁-C₁₂ linear or branched alkyl, C₃-C₁₂ cycloalkyl, C₆-C₁₂ aryl, C₇-C₁₂ alkaryl and C₇-C₁₂ aralkyl, the hydrogen atom(s) on the benzene ring in the aryl, the alkaryl and the aralkyl being optionally substituted by a halogen atom or a C₁-C₄ alkoxy; still further preferably, R₁₃, R₁₄ and R₁₅ are, each independently, selected from the group consisting of C₁-C₄ linear or branched alkyl, C₃-C₆ cycloalkyl, C₆-C₈ aryl, C₇-C₈ alkaryl and C₇-C₈ aralkyl, the hydrogen atom(s) on the benzene ring in the aryl, the alkaryl and the aralkyl being optionally substituted by a halogen atom. The term "halogen atom" as used herein refers to fluorine, chlorine, bromine or iodine.

More preferably, the phosphate compound is at least one selected from trimethyl phosphate, triethyl phosphate, tributyl phosphate, triphenyl phosphate, tris(o-, m- or p-tolyl) phosphate, tris(o-, m- or p-cumyl) phosphate, tris(o-, m- or p-methoxyphenyl) phosphate, phenyldimethyl phosphate, (o-, m- or p-tolyl) dibutyl phosphate, (o-, m- or p-cumyl) dimethyl phosphate, (o-, m- or p-cumyl) diethyl phosphate, (o-, m- or p-cumyl) dibutyl phosphate, phenyl di(o-, m- or p-tolyl) phosphate, phenyl di(o-, m- or p-cumyl) phosphate, 2,5-dimethylphenyl dibutyl phosphate, 3,5-dimethylphenyl dibutyl phosphate, 2,5-diisopropylphenyl dimethyl phosphate, 2,5-diisopropylphenyl diethyl phosphate, 2,5-di-tert-butylphenyl dimethyl phosphate and o-tolyl bis(2,5-di-tert-butylphenyl) phosphate.

Most preferably, the phosphate compound is tributyl phosphate.

In the present invention, there are not particular limitations to the type of the diether compound, and it can be various existing diether compounds that can be used as an internal electron donor in a catalyst for olefin polymerization. Preferably, the diether compound is at least one of those represented by formula (2), 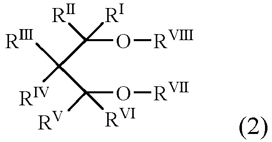 wherein, R^{I}, R^{II}, R^{III}, R^{V}, R^{V} and R^{VI} are the same or different, and are each independently selected from the group consisting of hydrogen, halogen atom, C₁-C₂₀ linear or branched alkyl, C₃-C₂₀ cycloalkyl, C₆-C₂₀ aryl, C₇-C₂₀ alkaryl and C₇-C₂₀ aralkyl, with the R^{I}-R^{VI} groups being optionally linked to form a ring; R^{VII} and R^{VIII} are the same or different, and are each independently selected from the group consisting of C₁-C₂₀ linear or branched alkyl, C₃-C₂₀ cycloalkyl, C₆-C₂₀ aryl, C₇-C₂₀ alkaryl and C₇-C₂₀ aralkyl.

Preferably, the diether compound is at least one selected from 2-(2-ethylhexyl)-1,3-dimethoxypropane, 2-isopropyl-1,3-dimethoxypropane, 2-butyl-1,3-dimethoxypropane, 2-sec-butyl-1,3-dimethoxypropane, 2-cyclohexyl-1,3-dimethoxypropane, 2-phenyl-1,3-dimethoxypropane, 2-(2-phenylethyl)-1,3-dimethoxypropane, 2-(2-cyclohexylethyl)-1,3-dimethoxypropane, 2-(p-chlorophenyl)-1,3-dimethoxypropane, 2-(diphenylmethyl)-1,3-dimethoxypropane, 2,2-dicyclohexyl-1,3-dimethoxypropane, 2,2-dicyclopentyl-1,3-dimethoxypropane, 2,2-diethyl-1,3-dimethoxypropane, 2,2-dipropyl-1,3-dimethoxypropane, 2,2-diisopropyl-1,3-dimethoxypropane, 2,2-dibutyl-1,3-dimethoxypropane, 2-methyl-2-propyl-1,3-dimethoxypropane, 2-methyl-2-benzyl-1,3-dimethoxypropane, 2-methyl-2-ethyl-1,3 -dimethoxypropane, 2-methyl-2-isopropyl-1,3-dimethoxypropane, 2-methyl-2-phenyl-1,3 -dimethoxypropane, 2-methyl-2-cyclohexyl-1,3-dimethoxypropane, 2,2-bis(2-cyclohexylethyl)-1,3-dimethoxypropane, 2-methyl-2-isobutyl-1,3-dimethoxypropane, 2-methyl-2-(2-ethylhexyl)-1,3-dimethoxypropane, 2,2-diisobutyl-1,3-dimethoxypropane, 2,2-diphenyl-1,3-dimethoxypropane, 2,2-dibenzyl-1,3-dimethoxypropane, 2,2-bis(cyclohexylmethyl)-1,3-dimethoxypropane, 2-isobutyl-2-isopropyl-1,3-dimethoxypropane, 2-(1-methylbutyl)-2-isopropyl-1,3-dimethoxypropane, 2-isopropyl-2-isopentyl-1,3-dimethoxypropane, 2-phenyl-2-isopropyl-1,3-dimethoxypropane, 2-phenyl-2-sec-butyl-1,3-dimethoxypropane, 2-benzyl-2-isopropyl-1,3-dimethoxypropane, 2-cyclopentyl-2-isopropyl-1,3-dimethoxypropane, 2-cyclopentyl-2-sec-butyl-1,3-dimethoxypropane, 2-cyclohexyl-2-isopropyl-1,3-dimethoxypropane, 2-cyclohexyl-2-sec-butyl-1,3-dimethoxypropane, 2-isopropyl-2-sec-butyl-1,3-dimethoxypropane, 2-cyclohexyl-2-cyclohexylmethyl-1,3-dimethoxypropane and 9,9-dimethoxymethylfluorene.

Most preferably, the diether compound is 2-isopropyl-2-isopentyl-1,3-dimethoxypropane and/or 9,9-dimethoxymethylfluorene.

In the present invention, the phosphate compound and the diether compound are used in combination as internal electron donor, and the molar ratio of the phosphate compound to the diether compound is preferably controlled at 0.02-0.30:1, such as 0.02-0.28:1, further preferably controlled at 0.03-0.25:1, such as 0.04-0.25:1, and more preferably controlled at 0.04-0.20:1, such as 0.05-0.20:1. This can effectively improve the sensitivity to hydrogen modulation and stereospecificity of the catalyst, help to reduce the content of xylene solubles of the polymer, and make the resultant polymer narrow in molecular weight distribution.

In the present invention, the magnesium-containing compound can be various magnesium-containing compounds that can be used in a catalyst for olefin polymerization. For example, the magnesium-containing compound can be a magnesium halide, a magnesium alkoxide, an alkoxy magnesium halide, a magnesium halide adduct carrier, or the like. The magnesium halide can be, for example, magnesium chloride and/or magnesium bromide; the magnesium alkoxide can be, for example, diethoxy magnesium; the alkoxy magnesium halide can be, for example, ethoxy magnesium chloride. The types of the magnesium halide adduct carriers are well known to those skilled in the art, such as those disclosed in CN1091748A, CN101050245A, CN101486722A, 201110142357.X, 201110142156.X and 201110142024.7, of which all relevant contents are incorporated herein by reference.

According to the present invention, the titanium-containing compound may be a conventional choice in the art. For example, the titanium-containing compound may be at least one of those represented by the general formulae Ti(OR')₃₋ₐZₐ and Ti(OR')_{4-b}Z_{b}, wherein R' is a C₁-C₂₀ alkyl, preferably a C₁-C₁₂ alkyl, and more preferably a C₁-C₆ alkyl; Z is a halogen, including F, Cl, Br or I; a is an integer of 1 to 3, and b is an integer of 1 to 4. Preferably, the titanium-containing compound is one or more of titanium tetrachloride, titanium tetrabromide, titanium tetraiodide, tributoxytitanium chloride, dibutoxytitanium dichloride, butoxytitanium trichloride, triethoxytitanium chloride, diethoxytitanium dichloride, ethoxytitanium trichloride and titanium trichloride.

The contents of magnesium, titanium and the internal electron donor in the solid catalyst component are not particularly limited in the present invention, and they can be any of the contents found in the conventional solid catalyst components in the art. Preferably, relative to one part by weight of titanium element, the content of magnesium element is from 2 to 16 parts by weight, preferably from 3 to 13 parts by weight, and more preferably from 4 to 10 parts by weight; and the content of the internal electron donor is from 2 to 16 parts by weight, preferably from 3 to 14 parts by weight, and more preferably from 4 to 12 parts by weight.

In the present invention, the alkylaluminum compound can be various alkylaluminum compounds conventionally used in the art. For example, the alkylaluminum compound can be at least one of compounds represented by the general formula AlR₁₆R₁₆'R₁₆", wherein R₁₆, R₁₆' and R₁₆" are each independently a C₁-C₈ alkyl or a halogen, and at least one of them is a C₁-C₈ alkyl, the hydrogen atom(s) on the alkyl being optionally substituted with halogen. Specific examples of the C₁-C₈ alkyl group include, but are not limited to, methyl, ethyl, propyl, n-butyl, isobutyl, pentyl, hexyl, n-heptyl, n-octyl, and the halogen can be fluorine, chlorine, bromine, iodine. Specifically, the alkylaluminum compound can be, for example, one or more selected from the group consisting of triethylaluminum, triisobutylaluminum, tri-n-butylaluminum, tri-n-hexylaluminum, diethylaluminum monochloride, diisobutylaluminum monochloride, di-n-butylaluminum monochloride, di-n-hexylaluminum monochloride, monoethylaluminum dichloride, isobutylaluminum dichloride, mono-n-butylaluminum dichloride and n-hexylaluminum dichloride.

According to the present invention, the amount of the alkyl aluminum compound used can be ones commonly used in the art. Preferably, the molar ratio of aluminum in the alkylaluminum compound to titanium in the solid catalyst component is 1-1000:1. Further preferably, the molar ratio of aluminum in the alkylaluminum compound to titanium in the solid catalyst component is 20-500:1. Most preferably, the molar ratio of aluminum in the alkylaluminum compound to titanium in the solid catalyst component is 30-200:1.

In the present invention, the external electron donor compound can be various external electron donor compounds commonly used in the art, such as one or more of carboxylic acids, carboxylic acid anhydrides, carboxylic acid esters, ketones, ethers, alcohols, lactones, organic phosphorus compounds and organosilicon compounds.

According to a preferred embodiment of the present invention, the external electron donor compound is at least one of the organosilicon compounds represented by formula X,

(R₁₇)_{m'}(R₁₈)_{p'}Si(OR₁₉)_{q'} Formula X

wherein, R₁₇, R₁₈ and R₁₉ are each independently a C₁-C₁₈ hydrocarbon group, optionally containing a halogen; m' and p' are each independently an integer of from 0 to 2, q' is an integer of from 1 to 3, and the sum of m', p' and q' is 4;
preferably, R₁₇ and R₁₈ are each independently a C₃-C₁₀ linear or branched alkyl, a C₃-C₁₀ alkenyl, a C₃-C₁₀ cycloalkyl or a C₆-C₁₀ aryl, optionally containing a halogen; and R₁₉ is a C₁-C₁₀ linear or branched alkyl, preferably a C₁-C₄ linear or branched alkyl, and more preferably a methyl group.

Preferably, the organosilicon compound is at least one selected from cyclohexylmethyldimethoxysilane, diisopropyldimethoxysilane, di-n-butyldimethoxysilane, diisobutyldimethoxysilane, diphenyldimethoxysilane, methyl-tert-butyldimethoxysilane, dicyclopentyldimethoxysilane, cyclohexyltrimethoxysilane, methyltrimethoxysilane, ethyltrimethoxysilane , propyltrimethoxysilane, propyltriethoxysilane, tert-butyltrimethoxysilane, tert-hexyltrimethoxysilane and 2-ethylpiperidinyl-2-tert-butyldimethoxysilane.

If used, the external electron donor can be added directly to the reactor, or it can be added to equipment and lines associated with the feeds to the reactor.

According to the present invention, the molar ratio of aluminum in the alkylaluminum compound to the external electron donor compound is preferably 1-50:1, and more preferably 2-20:1. Controlling the amounts of the alkylaluminum compound and the external electron donor compound within the above preferred ranges can further improve the properties of the resulting polymer.

According to this aspect of the present invention, during the preparation of the olefin polymer, the catalyst may be directly added to the reactor, or may be added to the reactor after pre-complexation and/or pre-polymerization.

The polymerization of propylene and butene can be carried out according to known methods, in liquid phase monomers or inert solvents containing polymerizable monomers, or in gas phase, or by combined polymerization processes in gas phase and liquid phase. The polymerization temperature can be in a range of from 10 to 150 °C, and preferably from 60 to 90 °C; and the polymerization pressure is higher than the saturated vapor pressure of propylene at the corresponding polymerization temperature, and may be, for example, in a range of from 0.01 to 10 MPa, preferably from 0.05 to 5 MPa, and more preferably from 0.1 to 4 MPa. As used herein, the pressure refers to gauge pressure.

During the polymerization reaction, the inert gas as well as the type and amount of solvent used can be conventional choice in the art.

The polymerization method as described herein is suitable for the currently mature and large-scale Spheripol process, Hypol process and the like.

In some embodiments, the method of the present invention further comprises conducting a precontact reaction of the solid catalyst component, the alkylaluminum compound, and the optional external electron donor compound to provide a precontacted catalyst, and after the precontact reaction and before the polymerization reaction, conducting a prepolymerization reaction with propylene monomer and/or other alpha-olefin monomers (e.g., ethylene or butene) and optionally hydrogen in the presence of the precontacted catalyst.

In some embodiments, the temperature for the precontact reaction ranges from -10 to 30 °C, and preferably from 0 to 15 °C; and the duration of the precontact reaction ranges from 0.05 to 30 min, and preferably from 0.1 to 10 min. Conducting the precontact reaction can significantly improve the polymerization activity and stereospecificity of the catalyst as well as the bulk density of the resultant polymer, and enhance the impurity resistance of the catalytic active centers, thereby reducing the ash of the polymer, xylene solubles and breakage of polymer particles.

After the precontact reaction and before the polymerization reaction, it is preferred to subject the catalyst to a prepolymerization reaction with propylene monomer and/or other alpha-olefin monomers. A small amount of hydrogen or no hydrogen can be added during the prepolymerization, the temperature for the prepolymerization reaction ranges from 10 to 50 °C, preferably from 12 to 25 °C, and more preferably from 15 to 19 °C, and the duration of the prepolymerization reaction ranges from 1 to 40 min, and preferably from 5 to 20 min.

The polymerization of propylene and butene can be carried out according to known methods, in a liquid phase monomer or an inert solvent containing a polymerizable monomer, or in gas phase, or by combined polymerization processes in gas phase and liquid phase. The polymerization temperature is generally from 50 to 150 °C, and preferably from 60 to 90°C. The polymerization reaction pressure is normal pressure or higher; for example, it may be 0.01-10 MPa, preferably 0.05-5 MPa, and more preferably 1-4 MPa. The pressure as used herein refers to gauge pressure. During the polymerization, hydrogen gas can be added, as a polymer molecular weight regulator, to the polymerization reactor to adjust the molecular weight and melt index of the polymer. The residence time of the reaction monomers and catalyst in the polymerization reactor is in a range of from 0.5 to 6 h, and preferably from 1 to 4 h.

During the olefin polymerization reaction, the inert gas as well as the type and amount of solvent used can be conventional choice in the art.

The present invention further provides the propylene-butene copolymer prepared by the above preparation method.

The copolymers of the present invention can be formulated into compositions, which may contain additives commonly used in the art, such as antioxidants, halogen absorbers, antistatic agents, slip agents, nucleating agents, and the like.

The present invention further provides use of the propylene-butene copolymers in the fields such as food and/or healthcare products, for example, as packaging for food and/or healthcare products.

### Example

The present invention will be further illustrated below with reference to examples, but the scope of the present invention is not limited to these examples.

The composition of the copolymers was determined by infrared spectroscopy (FT-IR) analysis conducted on a 6700 infrared spectrometer from Nicolet Instruments.

The melt flow index of the copolymers was measured according to GB/T 3682-2000 at 230°C under a load of 2.16kg.

The content of xylene solubles of the copolymers was measured according to GB/T 24282-2009.

In the present invention, the molecular weight distribution index and the content (percent by weight) of the fraction with molecular weight below 1000 of polymer were determined by gel permeation chromatography (GPC). Specifically, a Shimadzu LC-10AT gel permeation chromatograph (GPC) was used, wherein trichlorobenzene was the mobile phase, and the temperature was 150 °C.

### Example 1

This example is used to illustrate a propylene-butene copolymer according to the present invention and its preparation method.

### (1) Preparation of catalyst component

In a 300 ml glass reactor, 90 ml of titanium tetrachloride was added and cooled to -20 °C, then 37 mmol (in terms of magnesium element) of magnesium halide support (prepared according to the method disclosed in Example 1 of CN1330086A) was added thereto. The contents were heated up to 110 °C, and 0.8 mmol of tributyl phosphate and 7.9 mmol of 2-isopropyl-2-isopentyl-1,3-dimethoxypropane were added during the heating process. After maintaining the reaction mixture at 110 °C for 30 min, the liquid was filtered off, and the solids were washed with titanium tetrachloride, then with hexane, and dried under vacuum to obtain catalyst component Cat-1.

### (2) Preparation of propylene-butene copolymer

Propylene, butene and hydrogen gas were fed into a reactor, then the catalyst component (Cat-1), triethylaluminum and cyclohexylmethyldimethoxysilane (with the molar ratio of the catalyst component Cat-1 in terms of titanium element to the triethylaluminum in terms of aluminum element being 1:160, and the molar ratio of the cyclohexylmethyldimethoxysilane to the triethylaluminum in terms of aluminum element being 1:5) were introduced into the reactor. The polymerization reaction was conducted under conditions of a reaction temperature of 69 °C, a reaction pressure of 3.5 MPa, a hydrogen concentration (detected by online chromatography) of 1600 wppm, a butene concentration in the reaction raw material of 5.4 mol%, and a reaction time of 1h. The resultant polymer was analyzed, and the results are shown in Table 1.

### Example 2

This example is used to illustrate a propylene-butene copolymer according to the present invention and its preparation method.

A catalyst component and a polymer were prepared according to the method described in Example 1, except that in the course of preparing the polymer, the butene concentration in the reaction raw material was 8.9 mol%. The resultant polymer was analyzed, and the results are shown in Table 1.

### Example 3

This example is used to illustrate a propylene-butene copolymer according to the present invention and its preparation method.

A catalyst component and a polymer were prepared according to the method described in Example 1, except that in the polymerization, the reaction pressure was 3.6 MPa, the hydrogen concentration was 2500 ppm, the butene concentration in the reaction raw material was 11 mol%, and the reaction time was 1.4 h. The resultant polymer was analyzed, and the results are shown in Table 1.

### Example 4

This example is used to illustrate a propylene-butene copolymer according to the present invention and its preparation method.

A catalyst component and a polymer were prepared according to the method described in Example 3, except that in the polymerization, the hydrogen concentration was 3100 ppm and the butene concentration in the reaction raw material was 9.1 mol%. The resultant polymer was analyzed, and the results are shown in Table 1.

### Example 5

This example is used to illustrate a propylene-butene copolymer according to the present invention and its preparation method.

A catalyst component was prepared according to the method described in Example 1, except that 1.3 mmol of tributyl phosphate and 7 mmol of 2-isopropyl-2-isopentyl-1,3-dimethoxypropane were added during the heating process, to afford catalyst component Cat-2.

A polymer was prepared according to the method described in Example 1, except that the molar ratio of the catalyst component Cat-2 in terms of titanium element to triethylaluminum in terms of aluminum element was 1:100, the molar ratio of cyclohexylmethyldimethoxysilane to triethylaluminum in terms of aluminum element was 1:3.5, the hydrogen concentration was 2000 ppm, and the butene concentration in the reaction raw material was 7 mol%.

### Comparative Example 1

A polymer was prepared according to the method described in Example 2, except that in the preparation of the polymer, the catalyst component Cat-1 was replaced by DQC catalyst component (comprising diisobutyl phthalate as an internal electron donor) purchased from Sinopec Catalyst Co., Ltd. Beijing Aoda Branch. The resultant polymer was analyzed, and the results are shown in Table 1.

**Table 1**

| No. | C₄ (mol%) | MFR (g/10min) | X.S. (wt%) |
|---|---|---|---|
| Example 1 | 3.4 | 20 | 2.3 |
| Example 2 | 5.5 | 22 | 2.7 |
| Example 3 | 6.9 | 42 | 3.4 |
| Example 4 | 5.7 | 60 | 3.1 |
| Example 5 | 4.5 | 25 | 2.5 |
| Comparative Example 1 | 4.8 | 11 | 4.3 |

| | | | |
|---|---|---|---|
| Notation: C₄ (mol%) represents the molar content of butene in the copolymer, and X.S. (wt%) represents the content of xylene solubles. | | | |

It can be seen from the results of the examples and comparative example that the propylene-butene copolymer of the present invention has high melt flow index and low content of xylene solubles, and the catalyst used in the present invention does not contain a phthalate (plasticizer) so that said polymer can be advantageously used in the fields of food and healthcare.

### Example 6

This example is used to illustrate the preparation method of the propylene-butene copolymer according to the present invention.

### (1) Preparation of catalyst component

In a 300 ml glass reactor, 90 ml of titanium tetrachloride was added and cooled to -20 °C, then 37 mmol (in terms of magnesium element) of magnesium halide support (prepared according to the method disclosed in Example 1 of CN1330086A) was added thereto. The contents were heated up to 110 °C, and 0.9 mmol of tributyl phosphate and 8.3 mmol of 2-isopropyl-2-isopentyl-1,3-dimethoxypropane were added during the heating process. After maintaining the reaction mixture at 110 °C for 30 min, the liquid was filtered off, and the solids were washed with titanium tetrachloride, then with hexane, and dried under vacuum to obtain catalyst component Cat-3.

### (2) Preparation of polypropylene

Propylene, butene and hydrogen gas were fed into a reactor. The catalyst component (Cat-3), triethylaluminum and cyclohexylmethyldimethoxysilane (with the molar ratio of the catalyst component Cat-3 in terms of titanium element to the triethylaluminum in terms of aluminum element being 1:120, and the molar ratio of the cyclohexylmethyldimethoxysilane to the triethylaluminum in terms of aluminum element being 1:4) were allowed to precontact at 10 °C for 5 min, then subjected to a prepolymerization reaction at 18 °C for 12 min, and then introduced into the reactor for polymerization reaction. The polymerization reaction was conducted under conditions of a reaction temperature of 69 °C, a reaction pressure of 3.5 MPa, a hydrogen concentration (detected by online chromatography) of 1300 ppm, a butene concentration in the reaction raw material of 6 mol%, and a reaction time of 1h. The resultant polymer was analyzed, and the results are shown in Table 2.

### Example 7

This example is used to illustrate the preparation method of the propylene-butene copolymer according to the present invention.

A catalyst component and a polymer were prepared according to the method described in Example 6, except that in the preparation of the polymer, the butene concentration in the reaction raw material was 11.5 mol%. The resultant polymer was analyzed, and the results are shown in Table 2.

### Example 8

This example is used to illustrate the preparation method of the propylene-butene copolymer according to the present invention.

A catalyst component and a polymer were prepared according to the method described in Example 6, except that in the polymerization, the hydrogen concentration was 2000 ppm, the precontact reaction was conducted at 8 °C for 6 min, and the butene concentration in the reaction raw material was 9 mol%. The resultant polymer was analyzed, and the results are shown in Table 2.

### Example 9

A catalyst component was prepared according to the method described in Example 6, except that 1.4 mmol of tributyl phosphate and 8 mmol of
2-isopropyl-2-isopentyl-1,3-dimethoxypropane were added during the heating process, to afford catalyst component Cat-4.

A polymer was prepared according to the method described in Example 6, except that the molar ratio of the catalyst component Cat-4 in terms of titanium element to triethylaluminum in terms of aluminum element was 1:80, the molar ratio of cyclohexylmethyldimethoxysilane to triethylaluminum in terms of aluminum element was 1:7, the hydrogen concentration was 1000 ppm, and the butene concentration in the reaction raw material was 7 mol%.

### Comparative Example 2

A polymer was prepared according to the method described in Example 8, except that in the preparation of the polymer, the catalyst component Cat-3 was replaced by DQC catalyst component (comprising diisobutyl phthalate as an internal electron donor) purchased from Sinopec Catalyst Co., Ltd. Beijing Aoda Branch. The resultant polymer was analyzed, and the results are shown in Table 2.

**Table 2**

| No. | C₄ (mol%) | X.S. (wt%) | Mw/Mn | Mw<1000(%) |
|---|---|---|---|---|
| Example 6 | 3.8 | 2.4 | 3.7 | 0 |
| Example 7 | 7.2 | 3.6 | 3.6 | 0 |
| Example 8 | 5.7 | 2.8 | 3.8 | 0 |
| Example 9 | 4.4 | 2.7 | 3.6 | 0 |
| Comparative Example2 | 4.9 | 4.5 | 5.4 | 0.015 |

| | | | | |
|---|---|---|---|---|
| Notation: C₄ (mol%) represents the molar content of butene in the copolymer, and X.S. (wt%) represents the content of xylene solubles. | | | | |

It can be seen from the results of Examples 6-9 and Comparative Example 2 that the propylene-butene copolymer of the present invention has the characteristics of low content of xylene solubles, narrow molecular weight distribution and few small molecules, and the present invention utilizes a catalyst that does not contain a phthalate (plasticizer) so that said polymer can be advantageously used in the fields of food and healthcare.

Various embodiments of the present invention have been described above, and the foregoing descriptions are exemplary, not exhaustive, and not limited to the disclosed embodiments. Numerous modifications and variations will be apparent to those of ordinary skill in the art without departing from the scope and spirit of the described embodiments.

The endpoints of ranges and any values disclosed herein are not limited to the precise ranges or values, and these ranges or values should be understood as including values close to these ranges or values. For numerical ranges, the end values of individual ranges, the end values of individual ranges and the individual point values therebetween, and the individual point values can be combined with each other to obtain one or more new numerical ranges, which should be considered as being specifically disclosed herein.

## Claims

1. A propylene-butene copolymer, **characterized in that** the copolymer comprises from 90 to 99 mol% of propylene structural units and from 1 to 10 mol% of butene structural units, and preferably from 91 to 97 mol% of propylene structural units and from 3 to 9 mol% of butene structural units, based on the total moles of copolymer structural units, and that the copolymer has a content of xylene solubles of ≤ 4 wt%, preferably ≤ 3 wt%, wherein the propylene-butene copolymer is substantially free of a fraction having a molecular weight below 1000.

2. The propylene-butene copolymer as claimed in claim 1, wherein the copolymer has a molecular weight distribution index, Mw/Mn, of less than 5, preferably less than 4.5, and more preferably less than 4.

3. The propylene-butene copolymer as claimed in claim 1, wherein the propylene-butene copolymer is free of phthalate-type plasticizers.

4. A propylene-butene copolymer, **characterized in that** the copolymer comprises from 92 to 99 mol% of propylene structural units and from 1 to 8 mol% of butene structural units, and preferably from 93 to 97 mol% of propylene structural units and from 3 to 7 mol% of butene structural units, based on the total moles of copolymer structural units, and that the copolymer has a melt flow index, as measured at 230 °C under 2.16 kg load, of ≥ 20g/10min, preferably from 35 to 200 g/10min, and more preferably from 50 to 100 g/10min, and a content of xylene solubles of ≤ 5 wt%, preferably ≤ 4 wt%, and more preferably ≤ 3 wt%.

5. The propylene-butene copolymer as claimed in claim 4, wherein the propylene-butene copolymer is free of phthalate-type plasticizers.

6. A method for preparing a propylene-butene copolymer, comprising the step of polymerizing propylene and butene in the presence of a catalyst and optional hydrogen under olefin polymerization conditions, to obtain the propylene-butene copolymer,
wherein the catalyst is a Ziegler-Natta catalyst comprising a solid catalyst component, an alkylaluminum compound and an optional external electron donor compound,
the solid catalyst component comprising a reaction product of
(i) a magnesium-containing compound;
(ii) a titanium-containing compound; and
(iii) an internal electron donor,
wherein the internal electron donor comprises a phosphate compound and a diether compound.

7. The method as claimed in claim 6, wherein the olefin polymerization reaction is carried out in the presence of hydrogen, wherein the hydrogen concentration on molar basis in the polymerization system is ≥ 1200 ppm, preferably in the range of from 1800 to 8000 ppm, and more preferably in the range of from 2300 to 6000 ppm.

8. The method as claimed in claim 6 or 7, further comprising conducting a precontact reaction of the solid catalyst component, the alkylaluminum compound, and the optional external electron donor compound to provide a precontacted catalyst, and after the precontact reaction and before the polymerization reaction, conducting a prepolymerization reaction using propylene monomer and/or other alpha-olefin monomer such as ethylene or butene and optionally hydrogen in the presence of the precontacted catalyst.

9. The method as claimed in any one of claims 6 to 8, wherein the propylene and the butene are used in the polymerization in amounts such that the copolymer comprises 92-99 mol% of propylene structural units and 1-8 mol% of butene structural unit, preferably 93-97 mol% of propylene structural units and 3-7 mol% of butene structural units, based on the total moles of copolymer structural units.

10. The method as claimed in any one of claims 6 to 8, wherein the propylene and the butene are used in the polymerization in amounts such that the copolymer comprises 90-99 mol% of propylene structural units and 1-10 mol% of butene structural unit, preferably 91-97 mol% of propylene structural units and 3-9 mol% of butene structural units, based on the total moles of copolymer structural units.

11. The method as claimed in any one of claims 6 to 10, having at least one of the following features:
- the combined content of the phosphate compound and the diether compound is from 70 to 100 % by weight, preferably from 80 to 100 % by weight, further preferably from 90 to 100 % by weight, and most preferably 100 % by weight, based on the weight of the internal electron donor;
- the phosphate compound is at least one of those represented by formula (1), 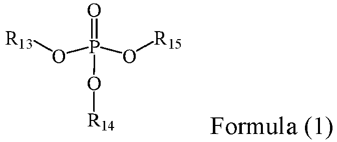 wherein, R₁₃, R₁₄ and R₁₅ are, each independently, selected from the group consisting of C₁-C₂₀ linear or branched alkyl, C₃-C₂₀ cycloalkyl, C₆-C₂₀ aryl, C₇-C₂₀ alkaryl and C₇-C₂₀ aralkyl, the hydrogen atom(s) on the benzene ring in the aryl, the alkaryl and the aralkyl being optionally substituted by a halogen atom or a C₁-C₄ alkoxy; further preferably, R₁₃, R₁₄ and R₁₅ are, each independently, selected from the group consisting of C₁-C₁₂ linear or branched alkyl, C₃-C₁₂ cycloalkyl, C₆-C₁₂ aryl, C₇-C₁₂ alkaryl and C₇-C₁₂ aralkyl, the hydrogen atom(s) on the benzene ring in the aryl, the alkaryl and the aralkyl being optionally substituted by a halogen atom or a C₁-C₄ alkoxy; still further preferably, R₁₃, R₁₄ and R₁₅ are, each independently, selected from the group consisting of C₁-C₄ linear or branched alkyl, C₃-C₆ cycloalkyl, C₆-C₈ aryl, C₇-C₈ alkaryl and C₇-C₈ aralkyl, the hydrogen atom(s) on the benzene ring in the aryl, the alkaryl and the aralkyl being optionally substituted by a halogen atom;
preferably, the phosphate compound is at least one selected from trimethyl phosphate, triethyl phosphate, tributyl phosphate, triphenyl phosphate, tris(o-, m- or p-tolyl) phosphate, tris(o-, m- or p-cumyl) phosphate, tris(o-, m- or p-methoxyphenyl) phosphate, phenyldimethyl phosphate, (o-, m- or p-tolyl) dibutyl phosphate, (o-, m- or p-cumyl) dimethyl phosphate, (o-, m- or p-cumyl) diethyl phosphate, (o-, m- or p-cumyl) dibutyl phosphate, phenyl di(o-, m- or p-tolyl) phosphate, phenyl di(o-, m- or p-cumyl) phosphate, 2,5-dimethylphenyl dibutyl phosphate, 3,5-dimethylphenyl dibutyl phosphate, 2,5-diisopropylphenyl dimethyl phosphate, 2,5-diisopropylphenyl diethyl phosphate, 2,5-di-tert-butylphenyl dimethyl phosphate and o-tolyl bis(2,5-di-tert-butylphenyl) phosphate;
- the diether compound is at least one of those represented by formula (2), 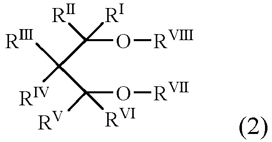 wherein, R^{I}, R^{II}, R^{III}, R^{V}, R^{V} and R^{VI} are the same or different, and are each independently selected from the group consisting of hydrogen, halogen atom, C₁-C₂₀ linear or branched alkyl, C₃-C₂₀ cycloalkyl, C₆-C₂₀ aryl, C₇-C₂₀ alkaryl and C₇-C₂₀ aralkyl, with the R^{I}-R^{VI} groups being optionally linked to form a ring; R^{VII} and R^{VIII} are the same or different, and are each independently selected from the group consisting of C₁-C₂₀ linear or branched alkyl, C₃-C₂₀ cycloalkyl, C₆-C₂₀ aryl, C₇-C₂₀ alkaryl and C₇-C₂₀ aralkyl;
preferably, the diether compound is at least one selected from 2-(2-ethylhexyl)-1,3-dimethoxypropane, 2-isopropyl-1,3-dimethoxypropane, 2-butyl-1,3-dimethoxypropane, 2-sec-butyl-1,3-dimethoxypropane, 2-cyclohexyl-1,3-dimethoxypropane, 2-phenyl-1,3-dimethoxypropane, 2-(2-phenylethyl)-1,3-dimethoxypropane, 2-(2-cyclohexylethyl)-1,3-dimethoxypropane, 2-(p-chlorophenyl)-1,3-dimethoxypropane, 2-(diphenylmethyl)-1,3-dimethoxypropane, 2,2-dicyclohexyl-1,3-dimethoxypropane, 2,2-dicyclopentyl-1,3-dimethoxypropane, 2,2-diethyl-1,3-dimethoxypropane, 2,2-dipropyl-1,3-dimethoxypropane, 2,2-diisopropyl-1,3-dimethoxypropane, 2,2-dibutyl-1,3-dimethoxypropane, 2-methyl-2-propyl-1,3-dimethoxypropane, 2-methyl-2-benzyl-1,3-dimethoxypropane, 2-methyl-2-ethyl-1,3 -dimethoxypropane, 2-methyl-2-isopropyl-1,3-dimethoxypropane, 2-methyl-2-phenyl-1,3 -dimethoxypropane, 2-methyl-2-cyclohexyl-1,3-dimethoxypropane, 2,2-bis(2-cyclohexylethyl)-1,3-dimethoxypropane, 2-methyl-2-isobutyl-1,3-dimethoxypropane, 2-methyl-2-(2-ethylhexyl)-1,3-dimethoxypropane, 2,2-diisobutyl-1,3-dimethoxypropane, 2,2-diphenyl-1,3-dimethoxypropane, 2,2-dibenzyl-1,3-dimethoxypropane, 2,2-bis(cyclohexylmethyl)-1,3-dimethoxypropane, 2-isobutyl-2-isopropyl-1,3-dimethoxypropane, 2-(1-methylbutyl)-2-isopropyl-1,3-dimethoxypropane, 2-isopropyl-2-isopentyl-1,3-dimethoxypropane, 2-phenyl-2-isopropyl-1,3-dimethoxypropane, 2-phenyl-2-sec-butyl-1,3-dimethoxypropane, 2-benzyl-2-isopropyl-1,3-dimethoxypropane, 2-cyclopentyl-2-isopropyl-1,3-dimethoxypropane, 2-cyclopentyl-2-sec-butyl-1,3-dimethoxypropane, 2-cyclohexyl-2-isopropyl-1,3-dimethoxypropane, 2-cyclohexyl-2-sec-butyl-1,3-dimethoxypropane, 2-isopropyl-2-sec-butyl-1,3-dimethoxypropane, 2-cyclohexyl-2-cyclohexylmethyl-1,3-dimethoxypropane and 9,9-dimethoxymethylfluorene;
- the molar ratio of the phosphate compound to the diether compound is 0.02-0.28:1, preferably 0.03-0.25:1, and more preferably 0.04-0.20:1; alternatively, the molar ratio of the phosphate compound to the diether compound is 0.02-0.30: 1, preferably 0.04-0.25: 1, and more preferably 0.05-0.20: 1;
- the magnesium-containing compound is at least one of magnesium halides, magnesium alkoxides, alkoxy magnesium halides, and magnesium halide adducts;
- the titanium-containing compound is at least one of those represented by the general formulae Ti(OR')₃₋ₐZₐ and Ti(OR')_{4-b}Z_{b}, wherein R' is a C₁-C₂₀ alkyl, preferably a C₁-C₁₂ alkyl, and more preferably a C₁-C₆ alkyl; Z is a halogen; a is an integer of 1 to 3, and b is an integer of 1 to 4;
- in the solid catalyst component, relative to one part by weight of titanium element, the content of magnesium element is from 2 to 16 parts by weight, preferably from 3 to 13 parts by weight, and more preferably from 4 to 10 parts by weight; and the content of the internal electron donor is from 2 to 16 parts by weight, preferably from 3 to 14 parts by weight, and more preferably from 4 to 12 parts by weight;
- the alkylaluminum compound is at least one of compounds represented by the general formula AlR₁₆R₁₆'R₁₆", wherein R₁₆, R₁₆' and R₁₆" are each independently a C₁-C₈ alkyl or a halogen, and at least one of them is a C₁-C₈ alkyl, the hydrogen atom(s) on the alkyl being optionally substituted with a halogen;
- the molar ratio of aluminum in the alkylaluminum compound to titanium in the solid catalyst component is 1-1000: 1, preferably 20-500: 1, and further preferably 30-200: 1;
- the molar ratio of aluminum in the alkylaluminum compound to the external electron donor compound is 1-50: 1, preferably 2-20: 1, and more preferably 2-15: 1;
- the external electron donor compound is at least one of the organosilicon compounds represented by formula X,
(R₁₇)_{m'}(R₁₈)_{p'}Si(OR₁₉)_{q'} Formula X
wherein, R₁₇, R₁₈ and R₁₉ are each independently a C₁-C₁₈ hydrocarbon group, optionally containing a halogen; m' and p' are each independently an integer of from 0 to 2, q' is an integer of from 1 to 3, and the sum of m', p' and q' is 4;
preferably, R₁₇ and R₁₈ are each independently a C₃-C₁₀ linear or branched alkyl, a C₃-C₁₀ alkenyl, a C₃-C₁₀ cycloalkyl or a C₆-C₁₀ aryl, optionally containing a halogen; and R₁₉ is a C₁-C₁₀ linear or branched alkyl, preferably a C₁-C₄ linear or branched alkyl, and more preferably a methyl group;
more preferably, the organosilicon compound is at least one selected from cyclohexylmethyldimethoxysilane, diisopropyldimethoxysilane, di-n-butyldimethoxysilane, diisobutyldimethoxysilane, diphenyldimethoxysilane, methyl-tert-butyldimethoxysilane, dicyclopentyldimethoxysilane, cyclohexyltrimethoxysilane, methyltrimethoxysilane, ethyltrimethoxysilane, tert-butyltrimethoxysilane, tert-hexyltrimethoxysilane and 2-ethylpiperidinyl-2-tert-butyldimethoxysilane;
- the temperature for the olefin polymerization reaction ranges from 10 to 150 °C, preferably from 50 to 150 °C, and more preferably from 60 to 90 °C;
- the pressure for the olefin polymerization reaction ranges from 0.01 to 10 MPa, preferably from 0.05 to 5 MPa, more preferably from 0.1 to 4 MPa, and more preferably from 1 to 4 MPa;
- the residence time of the reaction monomers and catalyst in the polymerization reactor is in a range of from 0.5 to 6 h, and preferably from 1 to 4 h;
- the temperature for the precontact reaction ranges from -10 to 30 °C, and preferably from 0 to 15 °C;
- the duration of the precontact reaction ranges from 0.05 to 30 min, and preferably from 0.1 to 10 min;
- a small amount of hydrogen gas is optionally introduced into the prepolymerization reaction;
- the temperature for the prepolymerization reaction ranges from 10 to 50 °C, preferably from 12 to 25 °C, and more preferably from 15 to 19 °C;
- the duration of the prepolymerization reaction ranges from 1 to 40 min, and preferably from 5 to 20 min.

12. Use of the propylene-butene copolymer as claimed in any one of claims 1 to 5 in food and/or medicine and healthcare products, preferably in packaging for food and/or healthcare products.
